(19) **Europäisches Patentamt / European Patent Office / Office européen des brevets**

(11) **EP 2 648 535 B1**

(12) **EUROPEAN PATENT SPECIFICATION**

(45) Date of publication and mention
of the grant of the patent:
**25.02.2015 Bulletin 2015/09**

(21) Application number: **11788529.3**

(22) Date of filing: **30.11.2011**

(51) Int Cl.:
*A23G 9/18* (2006.01)   *A23G 9/28* (2006.01)

(86) International application number:
**PCT/EP2011/071391**

(87) International publication number:
**WO 2012/076381 (14.06.2012 Gazette 2012/24)**

(54) **APPARATUS FOR THE PRODUCTION OF FROZEN CONFECTIONS**

VORRICHTUNG ZUR HERSTELLUNG GEFRORENER SÜSSWAREN

APPAREIL DE PRODUCTION DE CONFISERIES GLACÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2010 EP 10194101**

(43) Date of publication of application:
**16.10.2013 Bulletin 2013/42**

(73) Proprietors:
• **Unilever PLC**
**London, Greater London EC4Y 0DY (GB)**
Designated Contracting States:
**CY GB IE MT**
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**

(72) Inventor: **ROMANO, Gianfelice**
**Sharnbrook**
**Bedfordshire MK44 1LQ (GB)**

(74) Representative: **Warner, Guy Jonathan**
**Unilver PLC**
**Unilever Patent Group**
**Colworth House**
**Sharnbrook**
**Bedford, Bedfordshire MK44 1LQ (GB)**

(56) References cited:
EP-A1- 1 886 580          WO-A1-99/65325
WO-A1-2009/003752      WO-A2-2004/017748
GB-A- 203 393              US-A- 5 843 512

## Description

### Technical Field

The present invention relates to the manufacture of frozen confections that contain inclusions. In particular, it relates to the manufacture of these frozen confections using apparatus with forming elements and moulds.

### Background to the invention

Frozen confections such as ice creams, sherbets, frozen yoghurts and the like are very popular with consumers. Particularly preferred are products provided in a particular shape such as choc-ice type products that have a block of frozen confection enrobed with a layer of chocolate coating. A further development of this product form is the stick-based ice cream product typified by Magnum™ frozen confections which are shaped frozen confection products on a stick. Shaped products have become very popular with consumers but traditional "extrude and cut" manufacturing methods have been unable to provide more complex shapes. Improved manufacturing techniques have therefore been developed in which cavities (i.e. moulds) are filled with a frozen confection from a filling means (typically a nozzle) while the cavity is moved past the filling means. EP 1 531 681 describes the use of such a manufacturing technique for making frozen aerated products in which a pair of parallel rollers having mould cavities defined on their outer cylindrical surfaces are provided. Filling devices are also provided for supplying frozen aerated product into the mould cavities of the rollers. Motor means are arranged for counter rotating the two rollers, to move the two surfaces towards one another and to press the frozen aerated product in a cavity of one roller against the frozen aerated product situated in a cavity of the other roller to form a shaped frozen confection.

Particularly preferred by consumers are shaped frozen confections on sticks and EP 1 886 580 describes a process similar to that of EP 1 531 681. In this process a stick is placed between the two filled cavities to provide stick-based shaped frozen confections.

These applications demonstrate the suitability of using forming elements with cavities in the production of shaped frozen confections and the processes provide products with interesting shapes. The filling means used for filling the cavities on the forming elements are typically nozzles. These nozzles are located above the cavities and can have an outlet which corresponds to the opening of the cavity itself to ensure accurate and efficient filling. The outlets of the nozzles are positioned close to the surface of the forming elements, sometimes abutting the surface of the forming element. This close positioning has the advantage that the nozzle can act as a cutting means to smooth the surface of the dispensed frozen confection as the cavity moves past the nozzle. Such nozzles are described in EP 1 087 667 which describes methods and apparatus for forming an ice cream product. In this application the apparatus comprises a carousel with a plurality of open cavities. The carousel is rotatable so as to index each cavity to filling stations comprising a nozzle. The nozzle is capable of co-acting with said carousel as there is relative movement to act as a shearing means which, upon rotation of the carousel, has the effect of shearing the quantity of material within the cavity from that material still within the nozzle.

EP 2 162 014 discloses an apparatus for shaping a frozen confectionery product. This apparatus comprises a cavity, a filling means of a nozzle, and a cutting means. The filling means abuts the cavity so that the nozzle is in fluid communication with the cavity and means are provided for moving the cavity relative to the cutting means so that the cutting means shears the frozen confection and thereby cuts it. The relative movement between the cutting means and the cavity which shears the frozen confection is analogous to that of a cutting wire in the conventional extrude and cut process.

Frozen confections containing inclusions are particularly popular and it would be advantageous to use apparatuses and processes such as those described above which employ forming elements with cavities that are filled with a frozen confection from a nozzle. However, acceptable frozen confection products with inclusions cannot be made using such apparatus. We have found that when inclusions are incorporated into the frozen confection two major defects in the product occur. Firstly, the inclusions are not evenly distributed throughout the product and secondly, the inclusions are damaged. There therefore remains a need for an improved apparatus and process for the production of frozen confections with inclusions.

### Summary of the invention

We have now found that frozen confection products with inclusions can be effectively manufactured without the issues of damage to the inclusions or uneven distribution by using a specifically configured nozzle when filling the cavities on the forming elements.

Therefore, in a first aspect, the present invention provides an apparatus for the manufacture of frozen confections comprising:

- a forming element having one or more open cavities on its surface;
- a nozzle for filling said cavities with a frozen aerated material; and
- means for moving the forming element relative to the nozzle so that the end of the nozzle shears the frozen confection and thereby cuts it; characterised in that
- the internal surface of the nozzle facing into the direction of movement of the forming element relative to the nozzle is at an angle of at most 55° relative to the surface of the forming element.

Preferably the means for moving the forming element relative to the nozzle are means for moving the forming element.

Preferably the angle is at most 45°, more preferably at most 25°.

Preferably the forming element is a roller with the cavities on the outer surface of the roller.

Preferably the nozzle is positioned perpendicular to the surface of the forming element.

Preferably the nozzle has a cross section corresponding to the openings of the cavities.

In a second aspect, the present invention provides a process for the manufacture of frozen confections comprising inclusions, the process comprising:

- extruding a frozen confection containing inclusions from a nozzle into a cavity of a forming element;
- moving the cavity relative to the nozzle so that the end of the nozzle shears the frozen confection and thereby cuts it; and then
- removing the frozen confection from the cavity;
  characterised in that
- the internal surface of the nozzle facing into the direction of movement of the cavity relative to the nozzle is at an angle of at most 55° relative to the surface of the forming element.

Preferably the angle is at most 45°, more preferably at most 25°.

Preferably the frozen confection is an ice cream.

Preferably the frozen confection has an overrun of from 25% to 200%.

Preferably the inclusions are at least 2mm in diameter.

Preferably the inclusions are chocolate pieces.

Preferably a stick is inserted into the frozen confection prior to removal from the cavity.

Preferably the frozen confection is coated after removal from the cavity.

In a third aspect, the present invention provides a frozen confection produced by the process of the second aspect.

In a fourth aspect, the present invention provides a use of the apparatus of the first aspect for the manufacture of a frozen confection comprising inclusions.

**Description of Drawings**

The present invention will be further described by reference to the figures wherein:

Figure 1 shows cross sectional views of the apparatus of the invention.
Figure 2 shows the angle of the internal surface of the nozzle relative to the surface of the forming element.
Figure 3 shows alternative embodiments of the invention.
Figure 4 shows a comparison of the apparatus of the invention in use versus an apparatus of the prior art.

**Detailed description of the invention**

Apparatus used for forming moulded frozen confections typically have a forming element which is a piece of apparatus with a plurality of cavities in its surface. These cavities are the moulds which are filled with the frozen confection mix via a nozzle. These nozzles are typically in the form of a simple straight tube through which the frozen confection product is passed into the cavity. The nozzles themselves are typically arranged substantially perpendicular to the surface of the forming apparatus so that, for example, the cavities are horizontal during filling while the frozen confection passes vertically down through the tube of the nozzle. The end of the nozzle is in close proximity to the top of the cavity. The nozzle and the cavity are moved relative to one another as filling proceeds so that, as filling is completed, the cavity moves away from the nozzle. In this way the end of the nozzle shears and cuts through the frozen confection just above the surface of the filled cavity. Typically the nozzle remains static while the cavities are moved past it. However, when inclusions are present in the frozen confection this shearing effect can cause the inclusions to become damaged and unevenly distributed in the final product. This is due to the perpendicular internal face of the nozzle which interferes with the inclusions on the surface of the filled cavity. As the cavity moves past the nozzle any inclusions at the surface of the cavity are caught on the rear part of the nozzle. These inclusions are then dragged to the rear of the cavity forming a dense region of inclusions. Furthermore, many of these inclusions protrude from the surface of the cavity and when the cavity moves away from the nozzle these inclusions are caught between the nozzle and the edge of the cavity and are damaged or cut into smaller pieces. This uneven distribution and damage of inclusions is undesirable in the manufacture of frozen confections.

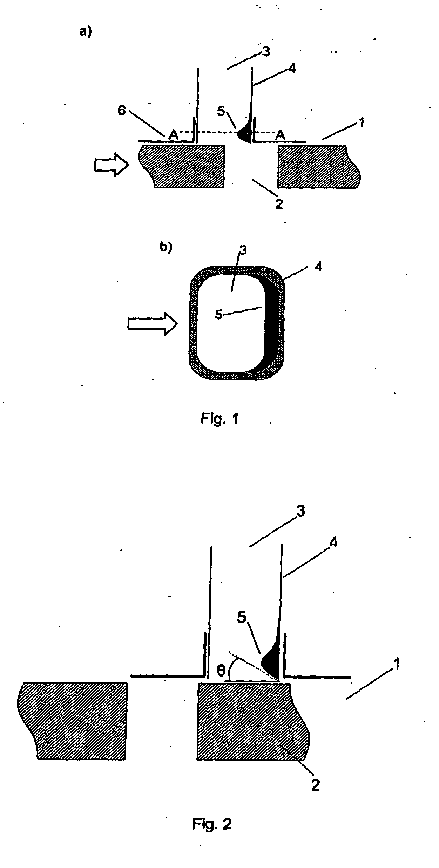

We have now discovered that these problems are overcome if a specifically configured nozzle is used when filling the cavities on the forming elements. Figure 1 a shows a vertical cross-section through such a nozzle. The nozzle is shown in communication with a cavity (2) of a forming element (1). The means for moving the forming element (1) move the forming element, and hence the cavity (2), past the nozzle in the direction shown by the arrow. Preferably the nozzle remains stationary and it is the forming element that is moved. The nozzle comprises a wall (4) surrounding a passage (3) through which the frozen confection and inclusions are passed into the cavity (2). The apparatus optionally comprises flanges (6) which prevent leakage of the frozen confection from the nozzle. In this embodiment the cavity is moved while the nozzle remains stationary. The internal surface of the nozzle which faces into the direction of movement of the cavity (i.e. the internal surface that faces the cavity as the cavity moves towards the nozzle) is angled relative to the surface of the forming element. Figure 2 shows that angle (θ) is measured as the angle formed between the surface of the forming element and the internal surface of the nozzle that faces into the direction of movement of the cavity. The angle θ of the internal face of the nozzle relative to the forming element is achieved in this embodiment by virtue of a bevelled insert (5) within the nozzle. Figure 1b is a horizontal cross section along line A-A showing how the bevelled insert (5) protrudes into the passage (3) of the nozzle, the arrow again indicates the direction of movement of the cavity (2) and forming element (1) relative to the nozzle. In a preferred embodiment, the nozzle has a cross section corresponding to the openings of the cavities, i.e. the outlet of the nozzle is of a similar shape to the opening of the cavity. This preferred configuration ensures that, when the outlet of the nozzle is aligned to the opening of the cavity, the cavilty can be filled accurately and quickly.

Angle θ is at most 55°, preferably at most 45°, more preferably at most 35°, more preferably still at most 30°, yet more preferably still at most 25°, most preferably at most 20° and is preferably at least 2°, more preferably at least 5°, more preferably still at least 10°.

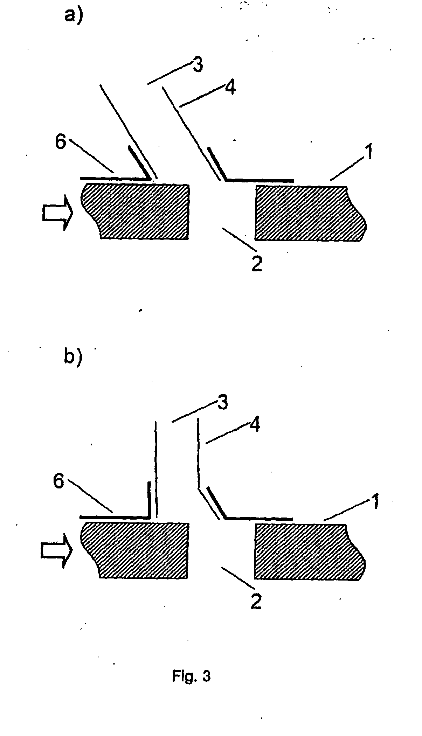

This angle can be achieved by altering the internal surface of the wall (4) of the nozzle, for example through the use of a bevelled insert as shown in Figures 1 & 2 or by specifically manufacturing the nozzle to have a deformation to the internal surface thus providing this angle. Alternative embodiments may achieve the same effect. For example, figure 3a shows that the nozzle itself can be tilted relative to the forming element to achieve the desired angle θ. In another embodiment the rear part of the nozzle (relative to the movement of the cavity) may be flared outwards as shown in figure 3b, again achieving the desired angle θ.

In the process for the manufacture of frozen confections containing inclusions a frozen confection mixture containing inclusions is extruded from the nozzle into the cavity (2) of the forming element (1) while the cavity (2) is moved relative to the nozzle such that the end of the nozzle shears the frozen confection and cuts it. The frozen confection is then removed from the cavity for subsequent processing steps such as freezing, hardening, coating and/or packaging. As used herein, frozen confection means an edible confection made by freezing a mix of ingredients which includes water. Frozen confections typically contain fat, non-fat milk solids and sugars, together with other minor ingredients such as stabilisers, emulsifiers, colours and flavourings. Preferred frozen confections include ice cream, frozen yoghurt, sorbet, sherbet and the like. Water ices are another preferred frozen confection but these typically do not contain fat or non-fat milk solids. The frozen confections can be prepared using known techniques.

Frozen confections are typically aerated. The term aeration means that gas has been incorporated into a product to form air cells. The gas can be any gas but is preferably, particularly in the context of food products, a food-grade gas such as air, nitrogen or carbon dioxide. The extent of the aeration can be measured in terms of the volume of the aerated product. The extent of aeration is typically defined in terms of "overrun". In the context of the present invention, % overrun is defined in volume terms as:

### Table 0001

$$Overrun\ (\%) = \frac{(\text{volume of final aerated product} - \text{volume of unaerated mix})}{\text{volume of unaerated mix}} \times 100$$

The amount of overrun present in the frozen confection will vary depending on the desired product characteristics and is preferably at least 25%, more preferably at least 50%, more preferably still at least 75% and preferably at most 200%, more preferably at most 150%.

The inclusions in the frozen confection may be of any type suitable for incorporation with frozen confections. For example they may be chocolate, toffee, caramel, cookie dough, nuts, and fruit or more complex inclusions such as caramel drops encased in chocolate. Preferably the inclusions are at least 1.5mm in diameter, more preferably at least 2mm, more preferably still at least 2.5mm, yet more preferably still at least 5mm. Preferably the inclusions are at most 20mm in diameter, more preferably at most 18mm, more preferably still at most 16mm. The inclusions may have heterogeneous shapes, sizes, volumes, surface areas and so on. The shape of the inclusions may be spherical, non-spherical, irregular or a mixture thereof. As used herein, the term diameter refers to the maximum width of the inclusions in any dimension. For inclusions having an irregular shape, the diameter is the width of the longest cross section that can be cut through the body of the inclusion. When the diameter of inclusions is referred to it is meant that at least 90% by number of the inclusions have that diameter.

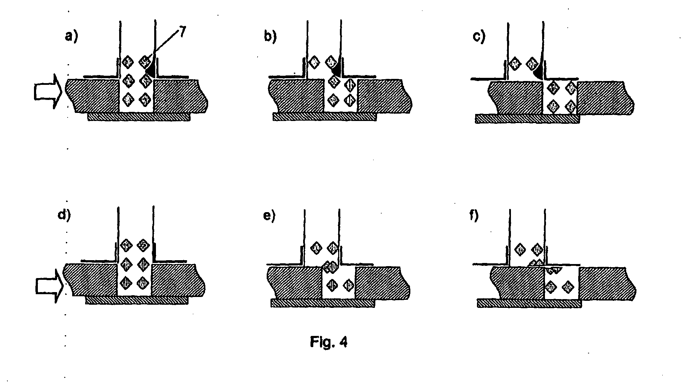

Figures 4a - 4c show how the inclusions are incorporated into the cavity as a result of the internal surface of the nozzle having an angle of at most 55° relative to the surface of the forming element. In figure 4 the inclusions are shown as diamond shapes. These are present within the matrix of a frozen confection (e.g. ice cream) which is not shown for the sake of clarity. In figure 4a the cavity has been filled with frozen confection and inclusions. At this stage in the process there is a continuous mass of frozen confection between the nozzle and the cavity and it can be seen that some inclusions are positioned between the cavity and the nozzle, i.e. they are neither fully within the cavity nor fully within the passage of the nozzle. In figure 4b the cavity has partially moved past the nozzle and the inclusions that were positioned between the nozzle and the cavity have been deflected downwards by the angle of the internal surface of the nozzle. Normally, the movement of the cavity relative to the nozzle creates lateral forces upon the inclusions which are then dragged along by the nozzle but in figure 4b it can be seen that these lateral forces are redirected downwards by the internal angle of the nozzle. This redirection of force results in a downward pressure acting upon the inclusions, pushing them into the cavity. In figure 4c it can be seen that the internal angle of the nozzle has caused the inclusions to be incorporated into the frozen confection within the cavity without damage and with an even distribution.

In comparison, figures 4d - 4f show the use of a standard nozzle for the manufacture of frozen confections with inclusions. Figure 4d shows the filling of the cavity, again some of the inclusions are neither fully within the cavity nor fully within the passage of the nozzle. However, in this case the angle θ is about 90°. As a result, these inclusions are caught upon the internal surface of the nozzle as the cavity moves past and are dragged towards the rear portion of the cavity, resulting in uneven distribution (Figure 4e). Additionally, because the angle θ is about 90°, there is no transfer of the lateral forces caused by the movement of the cavity. Therefore the inclusions are not moved downwards, and they remain protruding from the opening of the cavity. In figure 4f it can be seen that these inclusions are then sheared by the nozzle as the cavity moves past, causing damage to the inclusions.

The present invention will now be further described with reference to the following non-limiting examples.

Examples

The following experiments were performed in order to determine the effect of reducing the angle θ on the distribution and damage of inclusions in a frozen confection.

**Table 1- Ice cream formulation**

| Ingredient | wt% |
|---|---|
| Locust bean gum | 0.30 |
| Carrageenan | 0.05 |
| Coconut oil | 11 |
| Mono-/di-glyceride | 0.35 |
| Glucose Syrup LF9, 63DE (78% total solids) | 4.6 |
| Milk, skimmed, concentrate (35% total solids) | 27 |
| Sucrose | 13.7 |
| Vanilla Extract | 0.01 |
| Water | To 100 |

Ice cream formulated according to table 1 was prepared by mixing the ingredients at 80°C, homogenising the mix at 150bar, pasteurising at 85°C for 12 seconds and then ageing in an ageing tank with stirring for 24 hours. After ageing, the mix was pumped to a scraped surface heat exchanger where it was partially frozen and aerated to 60% overrun. The partially frozen ice cream was drawn from the scraped surface heat exchanger at -5°C and then pumped to a cold extrusion apparatus (single screw extruder, manufacturer Gerstenberg & Agger) where it was further frozen and extruded at a temperature -12°C. Inclusions were then added to the mix using an ingredient feeder (manufacturer Hoyer). Two different types of inclusions were added. The first was pecan pieces having an average width of 16mm and average height of 10mm (average mass 2g), the second was bon-bons (chocolate coated pieces filled with a caramel sauce - manufacturer Ulmer Schokoladen, Germany) having an average width of 13mm and average height of 9mm (average mass 1.4g). After the addition of the inclusions the mix was passed into a cold roller apparatus as described in EP 1 531 681. Two different nozzle types were used to fill the cavities in the forming elements of the cold roller apparatus. The first was a standard nozzle with an angle θ of 90°. These nozzles were then replaced with the second type of nozzle which contained a bevelled insert and had an angle θ of 15°. The resulting shaped frozen confections were analysed as described below to determine the distribution of the inclusions in the final product and the amount of damage caused by each nozzle.

Distribution

20 products were made using each nozzle and each inclusion type (80 in total). These were then cut vertically in two along the length of the product to provide two pieces: a front half (i.e. the part of the product at the front of the cavity relative to the movement of the forming element); and a rear half (i.e. the part of the product at the back of the cavity relative to the movement of the forming element). These were then melted and the number of inclusions in each part was counted. When the 90° nozzle was used the distribution of the inclusions was very uneven with the rear half containing 70% of the inclusions and only 30% were in the front half. However, when the 15° nozzle was used the inclusions were much more evenly distributed with 55% of inclusions in the rear half and 45% in the front half. This was the case for both bon-bons and for pecan pieces.

Damage

A further experiment was performed to determine the amount of damage caused to the inclusions. Again, the same two nozzles were used and the two types of inclusions were pecan pieces and bon-bons. 10g of each type of inclusion per frozen confection were used (i.e. an average of 5 pecan pieces or an average of 7 bon-bons per product). 30 replicates for each product (120 in total) were manufactured and then melted. The inclusions were inspected to determine how many had been damaged. The results are shown in Table 2 and 3 for pecan pieces and bon-bons respectively.

Table 2 - Results of damage analysis for pecan pieces

|  | Standard nozzle (θ = 90°) | Bevelled nozzle (θ = 15°) |
|---|---|---|
| % products with all inclusions damaged | 20 | 5 |
| % products with 1 undamaged inclusion | 25 | 30 |
| % products with 2 undamaged inclusions | 25 | 35 |
| % products with >=3 undamaged inclusions | 30 | 30 |

Table 3 - Results of damage analysis for bon-bons

|  | Standard nozzle (θ = 90°) | Bevelled nozzle (θ = 15°) |
|---|---|---|
| % products with 1 undamaged inclusion | 10 | 0 |
| % products with 2 undamaged inclusions | 20 | 0 |
| % products with >=3 undamaged inclusions | 70 | 100 |

These results show that pecan pieces are particularly prone to damage and in 20% of the products made using the standard nozzle every single inclusion had been damaged. However, this proportion fell to just 5% when the nozzle with an angle θ of 15° was used.

Bon-bons were not as prone to damage but nevertheless only 70% of the products contained 3 or more undamaged bon-bons when the standard nozzle was used. It was found that the nozzle with an angle θ of 15° reduced the amount of damage caused to the bon-bons and all of the products made using this nozzle contained at least 3 undamaged inclusions.

It can therefore be seen that the use of an apparatus according to the invention results in a reduced number of damaged inclusions and allows for an even distribution of the inclusions throughout the product.

**Claims**

1.  An apparatus for the manufacture of frozen confections comprising:

    - a forming element (1) having one or more open cavities (2) on its surface;
    - a nozzle (3) for filling said cavities (2) with a frozen aerated material; and
    - means for moving the forming element (1) relative to the nozzle (3) so that the end of the nozzle (3) shears the frozen confection and thereby cuts it;
    **characterised in that**
    - the internal surface of the nozzle (3) facing into the direction of movement of the forming element (1) relative to the nozzle (3) is at an angle of at most 55° relative to the surface of the forming element (1).

2.  An apparatus according to claim 1 wherein wherein angle is at most 25°.

3.  An apparatus according to claim 1 or claim 2 wherein the means for moving the forming element relative to the nozzle are means for moving the forming element.

4.  An apparatus according to any of the preceding claims wherein the forming element is in the form of a roller with the cavities on the outer surface of the roller.

5.  An apparatus according to any of the preceding claims wherein the nozzle is positioned perpendicular to the surface of the forming element.

6.  An apparatus according to any of the preceding claims wherein the nozzle has a cross section corresponding to the openings of the cavities.

7.  A process for the manufacture of frozen confections comprising inclusions, the process comprising:

    - extruding a frozen confection containing inclusions from a nozzle (3) into a cavity (2) of a forming element (1);
    - moving the cavity (2) relative to the nozzle (3) so that the end of the nozzle (3) shears the frozen confection and thereby cuts it; and then
    - removing the frozen confection from the cavity (2),
    **characterised in that**
    - the internal surface of the nozzle (3) facing into the direction of movement of the cavity (2) relative to the nozzle (3) is at an angle of at most 55° relative to the surface of the forming element (1).

8.  A process according to claim 7 wherein the angle is at most 25°.

9.  A process according to claim 7 or claim 8 wherein the frozen confection is an ice cream.

10. A process according to any of claims 7 to 9 wherein the frozen confection has an overrun of from 25% to 200%.

11. A process according to any of claims 7 to 10 wherein the inclusions are at least 2mm in diameter.

12. A process according to any of claims 7 to 11 wherein the inclusions are chocolate pieces.

13. A process according to any of claims 7 to 12 wherein a stick is inserted into the frozen confection prior to removal from the cavity.

14. A process according to any of claims 7 to 13 wherein the frozen confection is coated after removal from the cavity.

**Patentansprüche**

1. Vorrichtung für die Herstellung von gefrorenen Süßwaren, die umfasst:

   - ein Formungselement (1), das in seiner Oberfläche einen oder mehrere offene Hohlräume (2) besitzt;
   - eine Düse (3) zum Befüllen der Hohlräume (2) mit einem gefrorenen, luftdurchsetzten Material; und
   - Mittel zum Bewegen des Formungselements (1) relativ zu der Düse (3), so dass das Ende der Düsen (3) die gefrorene Süßware schert und dadurch abschneidet;
   **dadurch gekennzeichnet, dass**
   - die innere Oberfläche der Düse (3), die in Richtung der Bewegung des Formungselements (1) relativ zu der Düse (3) weist, einen Winkel von höchstens 55° relativ zu der Oberfläche des Formungselements (1) bildet.

2. Vorrichtung nach Anspruch 1, wobei der Winkel höchstens 25° beträgt.

3. Vorrichtung nach Anspruch 1 oder Anspruch 2, wobei die Mittel zum Bewegen des Formungselements relativ zu der Düse Mittel zum Bewegen des Formungselements sind.

4. Vorrichtung nach einem der vorhergehenden Ansprüche, wobei das Formungselement die Form einer Walze hat, wobei sich die Hohlräume auf der äußeren Oberfläche der Walze befinden.

5. Vorrichtung nach einem der vorhergehenden Ansprüche, wobei die Düse senkrecht zu der Oberfläche des Formungselements positioniert ist.

6. Vorrichtung nach einem der vorhergehenden Ansprüche, wobei die Düse einen Querschnitt hat, der den Öffnungen der Hohlräume entspricht.

7. Verfahren für die Herstellung gefrorener Süßwaren, die Einschlüsse aufweisen, wobei das Verfahren umfasst:

   - Extrudieren einer gefrorenen Süßware, die Einschlüsse enthält, von einer Düse (3) in einen Hohlraum (2) eines Formungselements (1);
   - Bewegen des Hohlraums (2) relativ zu der Düse (3), so dass das Ende der Düse (3) die gefrorene Süßware schert und dadurch abschneidet; und dann
   - Entfernen der gefrorenen Süßware aus dem Hohlraum (2),
   **dadurch gekennzeichnet, dass**
   - die innere Oberfläche der Düse (3), die in die Richtung der Bewegung des Hohlraums (2) relativ zu der Düse (3) weist, einen Winkel von höchstens 55° relativ zu der Oberfläche des Formungselements (1) bildet.

8. Verfahren nach Anspruch 7, wobei der Winkel höchstens 25° beträgt.

9. Verfahren nach Anspruch 7 oder Anspruch 8, wobei die gefrorene Süßware Eiskrem ist.

10. Verfahren nach einem der Ansprüche 7 bis 9, wobei die gefrorene Süßware einen Lufteinschlag im Bereich von 25 % bis 200 % besitzt.

11. Verfahren nach einem der Ansprüche 7 bis 10, wobei die Einschlüsse einen Durchmesser von wenigstens 2 mm haben.

12. Verfahren nach einem der Ansprüche 7 bis 11, wobei die Einschlüsse Schokoladenteile sind.

13. Verfahren nach einem der Ansprüche 7 bis 12, wobei in die gefrorene Süßware vor der Entnahme aus dem Hohlraum ein Stiel gesteckt wird.

14. Verfahren nach einem der Ansprüche 7 bis 13, wobei die gefrorene Süßware nach der Entnahme aus dem Hohlraum überzogen wird.

**Revendications**

1. Appareil pour la fabrication de confiseries glacées comprenant :

   - un élément de formation (1) présentant une ou plusieurs cavités ouvertes (2) sur sa surface ;
   - une buse (3) pour remplir lesdites cavités (2) avec un matériau aéré glacé ; et
   - un moyen pour déplacer l'élément de formation (1) par rapport à la buse (3) de sorte que l'extrémité de la buse (3) cisaille la confiserie glacée et la coupe par-là ;
   **caractérisé en ce que**
   - la surface interne de la buse (3) faisant face dans la direction de mouvement de l'élément de formation (1) à la buse (3) est disposée à un angle d'au plus 55° par rapport à la surface de l'élément de formation (1).

2. Appareil selon la revendication 1, dans lequel l'angle est d'au plus 25°.

3. Appareil selon la revendication 1 ou la revendication 2, dans lequel le moyen pour déplacer l'élément de formation par rapport à la buse est un moyen pour déplacer l'élément de formation.

4. Appareil selon l'une quelconque des revendications précédentes, dans lequel l'élément de formation est dans la forme d'un rouleau avec les cavités sur la surface externe du rouleau.

5. Appareil selon l'une quelconque des revendications précédentes, dans lequel la buse est disposée perpendiculairement à la surface de l'élément de formation.

6. Appareil selon l'une quelconque des revendications précédentes, dans lequel la buse présente une section transversale correspondant aux ouvertures des cavités.

7. Procédé pour la fabrication de confiseries glacées comprenant des inclusions, le procédé comprenant :

   - l'extrusion d'une confiserie glacée contenant des inclusions à partir d'une buse (3) dans une cavité (2) d'un élément de formation (1) ;
   - le déplacement de la cavité (2) par rapport à la buse (3) de sorte que l'extrémité de la buse (3) cisaille la confiserie glacée et la coupe par-là ; et ensuite
   - le prélèvement de la confiserie glacée de la cavité (2),
   **caractérisé en ce que**
   - la surface interne de la buse (3) faisant face dans la direction de mouvement de la cavité (2) à la buse (3) est disposée à un angle d'au plus 55° par rapport à la surface de l'élément de formation (1).

8. Procédé selon la revendication 7, dans lequel l'angle est d'au plus 25°.

9. Procédé selon la revendication 7 ou la revendication 8, dans lequel la confiserie glacée est une crème glacée.

10. Procédé selon l'une quelconque des revendications 7 à 9, dans lequel la confiserie glacée présente un dépassement de 25 % à 200 %.

11. Procédé selon l'une quelconque des revendications 7 à 10, dans lequel les inclusions sont d'un diamètre d'au moins 2 mm.

12. Procédé selon l'une quelconque des revendications 7 à 11, dans lequel les inclusions sont des morceaux de chocolat.

13. Procédé selon l'une quelconque des revendications 7 à 12, dans lequel un bâton est inséré dans la confiserie glacée avant le prélèvement de la cavité.

14. Procédé selon l'une quelconque des revendications 7 à 13, dans lequel la confiserie glacée est enrobée après le prélèvement de la cavité.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1531681 A
- EP 1886580 A
- EP 1087667 A
- EP 2162014 A